# EUROPÄISCHE PATENTSCHRIFT

(11) **EP 1 842 736 B1**
(45) Veröffentlichungstag und Bekanntmachung des Hinweises auf die Patenterteilung: **08.10.2008**
(21) Anmeldenummer: 07105322.7
(22) Anmeldetag: 30.03.2007
(51) Int. Cl.: B60R 21/13

(54) **Überrollschutzsystem für Kraftfahrzeuge mit mindestens einem aktiv aufstellbaren Überrollbügel**
Rollover protection system for motor vehicles with at least one actively positioned roll-bar
Système de protection contre les tonneaux pour véhicules automobiles dotés d'au moins un arceau de sécurité pouvant être monté activement

(30) Priorität: 04.04.2006 DE 102006015756
(43) Veröffentlichungstag der Anmeldung: 10.10.2007
(73) Patentinhaber: ISE Automotive GmbH, 51702 Bergneustadt (DE)
(72) Erfinder: Latussek, Holger, 51702 Bergneustadt (DE)
(74) Vertreter: Fuchs

(56) Entgegenhaltungen:
- EP-A2- 1 186 481
- DE-B3- 10 344 446
- DE-C1- 19 952 125

## Beschreibung

Die Erfindung bezieht sich auf ein Überrollschutzsystem für Kraftfahrzeuge, mit mindestens einem Überrollbügel, der mittels seiner beiden Bügelschenkel in einer fahrzeugfesten Halterung in Form eines zumindest annähernd wagenbreiten Querträgers geführt aufgenommen ist, und im Normalzustand durch eine Haltevorrichtung in einer unteren, abgelegten Ruhelage haltbar sowie sensorgesteuert unter Lösen der Haltevorrichtung durch einen Energiespeicher in eine verriegelte aufgestellte, stützende Stellung bringbar ist, wobei der fahrzeugfeste Querträger Führungsteile mit jeweils einer Führungsöffnung zur führenden Aufnahme des zugehörigen Bügelschenkels besitzt.

Derartige Überrollschutzsysteme dienen zum Schutz der Insassen in Kraftfahrzeugen ohne schützendes Dach, typischerweise in Cabriolets oder Sportwagen, indem sie bei einem Überschlag einen Überlebensraum für die Insassen aufspannen.

Eine Überrollschutzsystem nach dem Oberbegriff des Anspruchs 1 ist aus DE 100 44 930 C1 bekannt.

Es ist dabei bekannt, einen die gesamte Fahrzeugbreite überspannenden, fest installierten Überrollbügel vorzusehen (EP 0 233 777) oder jedem Fahrzeugsitz einen höhenunveränderlich fest installierten Überrollbügel (DE 196 04 423) zuzuordnen. Neben diesen sogenannten starren Überrollbügeln sind auch weit verbreitet konstruktive Lösungen für sogenannte aktive Überrollbügelsysteme im Markt, bei denen der Überrollbügel im Normalzustand abgelegt ist, und im Gefahrenfall, also bei einem drohenden Überschlag, sensorgesteuert mittels eines Energiespeichers schnell in eine schützende verriegelte Position aufgestellt wird, um zu verhindern, dass die Fahrzeuginsassen durch das sich überschlagende Fahrzeug erdrückt werden.

Diese "aktiven" Überrollschutzsysteme weisen typischerweise für jeden Sitz einen in einem fahrzeugfesten Kassetten-Gehäuse mit seinen Bügelschenkeln meist linear geführten U-förmigen Überrollbügel auf, der im Normalzustand gegen die Vorspannkraft einer Antriebs-Druckfeder durch eine Haltevorrichtung in einer unteren Ruhelage gehalten wird, und im Überschlagfall sensorgesteuert unter Lösen der Haltevorrichtung, durch die Federkraft in eine obere, stützende Stellung bringbar ist, wobei eine dann in Wirkeingriff tretende Verriegelungseinrichtung ein Eindrücken des Überrollbügels in die Kassette verhindert.

Eine derartige sitzbezogene Kassetten-Konstruktion eines Überrollbügelschutz-systems mit linear aufstellendem Überrollbügel und mit einer Sperrklinke in der Verriegelungseinrichtung zeigt beispielsweise die DE 100 40 642 C1.

Neben den Kassetten-Konstruktionen sind auch aktive Überrollschutzsysteme nach einem Konstruktionsprinzip mit einer Rückwand-Baueinheit bekannt, wie es beispielsweise in der DE 103 44 446 B3 beschrieben wird. Ein derartiges System weist eine zwischen Fond und Gepäckraum angebrachte Rahmenkonstruktion auf, bestehend einmal aus einem sich über die Innenbreite des Fahrzeuges erstreckenden, karosseriefest angebrachten Profil-Querträger, der Führungsmittel für die Bügelschenkel von zwei nebeneinander angeordneten U-förmigen Überrollbügeln aufweist sowie bestehend zum anderen aus sich vertikal nach unten erstreckenden Profil-Trägerelementen mit einem Bodenteil für die Aufnahme der üblichen Komponenten des ausfahrbaren Überrollschutzsystems, wie z.B. den Auslösemagneten für das sensorgesteuerte Auslösen der Ausfahrbewegung der Überrollbügel sowie die Antriebs-Druckfedern. Es ist dabei auch bekannt, zwei geschlossene Kassettensysteme mit jeweils einem aktiven Überrollbügel in einem Rückwandträger zu integrieren (DE 100 44 926 C1).

Es sind jedoch auch Überrollschutzsysteme mit einem annähernd die gesamte Fahrzeugbreite überspannenden, aktiv aufstellbaren Überrollbügel bekannt. Dabei kann der Bügelkopf als durchgehende Bügelschale (DE 195 40 819 A1) oder als Querjoch gemäß der DE 197 12 955 A1 ausgebildet sein, oder kann im Bereich der Fahrzeugsitze bügelkopfartige Ausformungen in einem Querjoch aufweisen (DE 100 44 930 C1).

Die Erfindung geht von dem Konstruktionsprinzip des die Wageninnenbreite überspannenden Querträgers aus und bezieht sich sowohl auf einen entsprechend breiten aktiv aufstellbaren Überrollbügel als auch auf zwei nebeneinander im Querträger angeordnete, aktiv aufstellbare Überrollbügel.

Vorgenannte Querträgerkonstruktionen nutzen typischerweise den Raum hinter den Rückenlehnen der Fondsitze, um die Überrollbügel bzw. die zugehörigen Komponenten unterzubringen. Dadurch ist der für eine Durchlademöglichkeit zwischen dem Fahrzeuginnenraum und dem Gepäckraum zur Verfügung stehende Freiraum sehr beschränkt und eignet sich in der Regel nur für langgestreckte flache Transportgegenstände, z.B. Skier oder Bretter.

Um dieses Problem zu entschärfen, sieht die DE 103 16 346 A1 bei zwei nebeneinander angeordneten aktiven Überrollbügelsystemen vor, dass sowohl die Überrollbügel als auch die Elemente zur Führung und Auslösung des Überrollbügels in eine Zwischenstellung verlagert werden können, um somit die Möglichkeit zur Durchladung von sperrigen Gütern unterhalb des Querträgers zu haben.

Nachteilig ist hierbei, dass der Querträger nicht mit verlagert wird, wodurch eine zwar breite, aber nicht sehr hohe Durchladeöffnung erzielt wird.

Der Erfindung liegt die Aufgabe zugrunde, das eingangs bezeichnete Überrollschutzsystem so auszubilden, dass eine relativ hohe Durchladeöffnung ermöglicht wird.

Die Lösung dieser Aufgabe gelingt bei einem Überrollschutzsystem für Kraftfahrzeuge mit mindestens einem Überrollbügel, der mittels seiner beiden Bügelschenkel in einer fahrzeugfesten Halterung in Form eines zumindest annähernd wagenbreiten Querträgers geführt aufgenommen ist, und im Normalzustand durch eine Haltevorrichtung in einer unteren, abgelegten Ruhelage haltbar sowie sensorgesteuert unter Lösen der Haltevorrichtung durch einen Energiespeicher in eine verriegelte aufgestellte, stützende Stellung bringbar ist, wobei der fahrzeugfeste Querträger Führungsteile mit jeweils einer Führungsbohrung zur führenden Aufnahme des zugehörigen Bügelschenkels besitzt, gemäß der Erfindung dadurch, dass am Querträger an beiden Stirnseiten jeweils ein Führungsstück ausgebildet ist, das in einer karosseriefest angebrachten Führungsschiene längsverschiebbar aufgenommen ist.

Durch die erfindungsgemäße Maßnahme ist das gesamte Schutzsystem stufig verstellbar im Fahrzeug montierbar. In der oberen Stufe kann eine hohe Durchladeöffnung geschaffen werden, weil auch der Querträger mit verstellt wird.

Entsprechende Ausgestaltungen und Weiterbildungen der Erfindung sind in Unteransprüchen gekennzeichnet und ergeben sich auch aus der folgenden Figurenbeschreibung.

Anhand eines in den Patentzeichnungen in verschiedenen Ansichten und Zuständen sowie in zwei Varianten dargestellten vorteilhaften Ausführungsbeispieles wird die Erfindung näher erläutert.

Es zeigen:
- Fig. 1: in einer Frontansicht ein Überrollschutzsystem mit einem sich über die Wagenbreite erstreckenden Querträger, an dem ein wagenbreiter aktiv aufstellbarer Überrollbügel geführt aufgenommen ist, wobei das gesamte Überrollschutzsystem stufig verstellbar im Fahrzeug montierbar ist,
- Fig. 2: eine Draufsicht auf das Überrollschutzsystem nach Fig. 1 mit zwei Varianten der Montage im Fahrzeug,
- Fig. 3: in einer horizontalen Querschnitts-Darstellung nähere Einzelheiten der Führungsmittel am Querträger sowohl für das Führen der Bügelschenkel als auch für das Führen des gesamten Systems, und
- Fig. 4: in einer isometrischen Ausschnitt-Darstellung nähere Einzelheiten für die Montage des Überrollschutzsystems im Fahrzeug, wobei ein Teil des Querträgers weggebrochen ist.

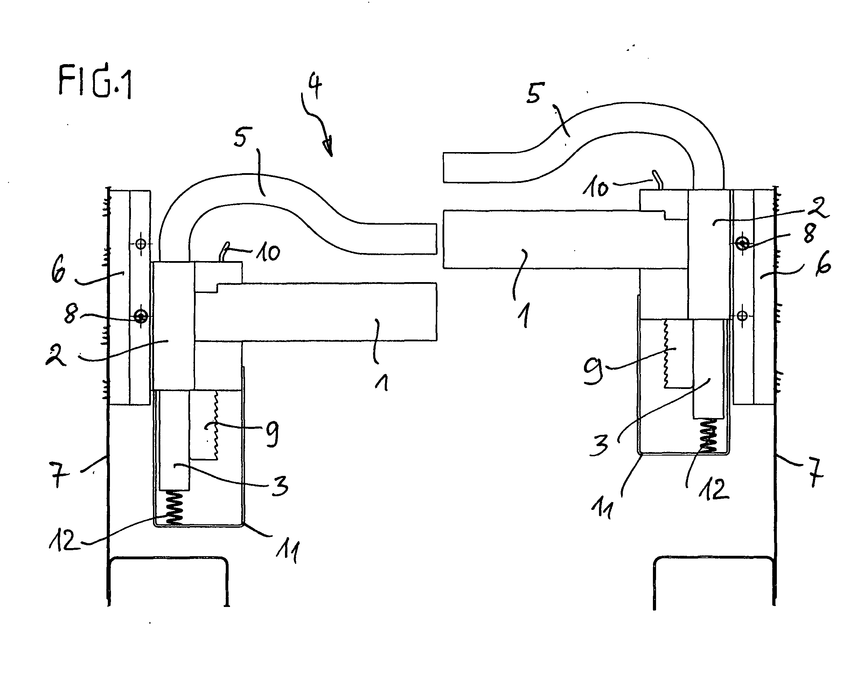

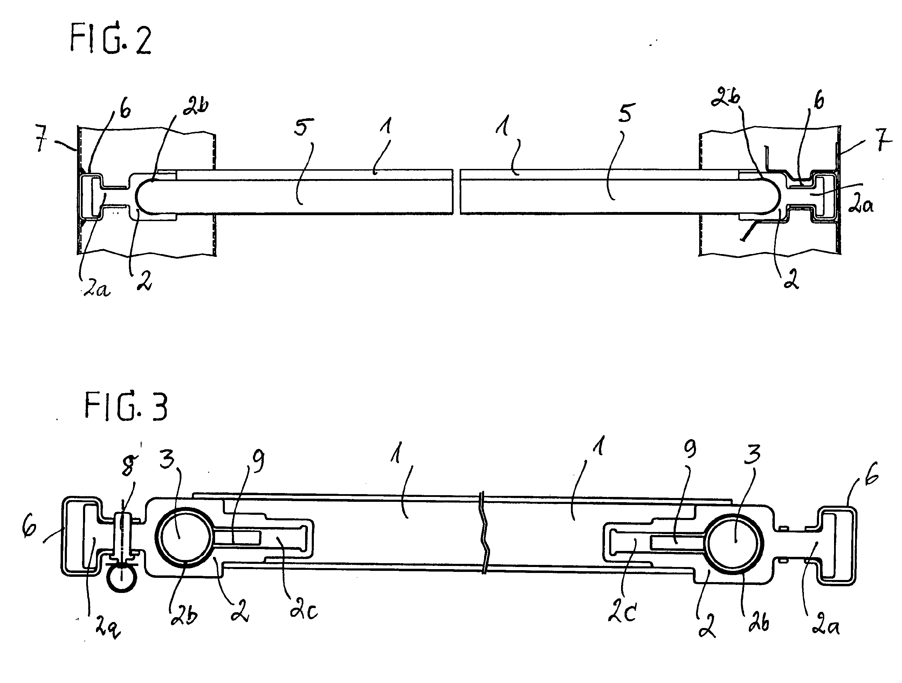

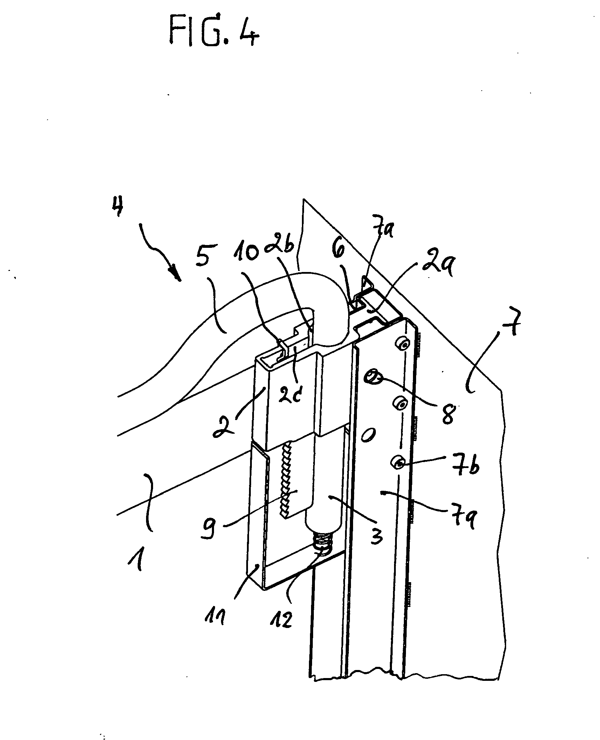

Die Fig. 1 zeigt in einer Frontansicht den Grundaufbau des erfindungsgemäßen Überrollbügelsystems nach dem Querträger-Prinzip, der anhand der Draufsicht nach Fig. 2 und der horizontalen querschnittlichen Darstellung im Bereich des Querträgers nach Fig. 3 und der perspektivischen Ausschnitt-Darstellung nach Fig. 4 noch verdeutlicht wird.

Das erfindungsgemäße Überrollbügelsystem weist einen in üblicher Weise hinter den Fondsitzen angebrachten Querträger 1, der sich annähernd über die gesamte Fahrzeugbreite erstreckt, auf. Er besitzt an beiden Endbereichen jeweils ein blockartiges seitliches Führungsteil 2 mit einer Bohrung 2 b zur führenden Aufnahme eines zugeordneten Bügelschenkels 3 eines sich ebenfalls annähernd über die gesamte Fahrzeugbreite erstreckenden Überrollbügels 4 mit einem entsprechend breiten Querjoch 5. Diese Führungsteile 2 des Querträgers, die am Querträger 1 einstückig angeformt oder separat angebracht werden können, weisen stirnseitig angeformte T-förmige Führungsansätze 2 a auf, welche in fahrzeugseitigen, d.h. karosseriefest angebrachten Führungsschienen 6 verschiebbar aufgenommen sind.
Dabei sind zwei Varianten möglich. Bei der einen Variante, die in Fig. 2, rechte Hälfte und in Fig. 4, welche den Lieferumfang zeigt, dargestellt ist, bilden die Führungsschienen 6 mit dem Querträger 1 und dem Überrollbügel 4 einen Lieferumfang und werden bei der Montage in eine Halterung 7 a, die an der Karosse 7 eingeschweisst ist, eingeschraubt (Schraubverbindung 7 b).

Alternativ gemäß einer zweiten Variante können die Führungsschienen 6 selbst auch fester Bestandteil der Karosse 7 sein, an der sie z.B. angeschweißt sind. In diesem Fall wird das Überrollbügelsystem mit den T-förmigen Führungs-Ansätzen 2 a in die fahrzeugseitigen Führungsschienen 6 eingeschoben. Diese zweite Variante ist in Fig. 1 und Fig. 2, linke Hälfte dargestellt.

Anstelle der T-förmigen Führungsansätze und den zugehörigen Führungsschienen können auch andere bekannte Führungen eingesetzt werden.

Durch die dargestellte Ausführung ist es möglich, das gesamte Schutzsystem einschließlich Querträger in den Führungsschienen 6 in der Vertikalen zu verstellen, vorzugsweise stufig. Im dargestellten Ausführungsbeispiel ist eine zweistufige Verstellbarkeit in zwei Positionen vorgesehen, mit einer Arretierung der T-förmigen Führungsansätze 2 a mittels Steckbolzen 8. In Fig. 1 ist die untere Position in der linken Hälfte und die obere Position in der rechten Hälfte dargestellt. Die beiden Positionen können einen Abstand von 40 - 200 mm haben.

Unabhängig von der Einbauposition kann jedoch der Überrollbügel seinen vollen Hub fahren.

In der oberen Position ist ersichtlich die Durchladehöhe wesentlich größer, insbesondere weil auch der Querträger 1 mit höher positioniert ist.

An den Bügelschenkeln 3 ist jeweils eine Zahnleiste 9 angebracht oder einstückig angeformt, welche ein Verriegelungselement der Wiedereinfahrsperre bildet. In den Führungsteilen 2 ist jeweils eine schmale, rechteckige Öffnung 2 c ausgebildet, in welcher einmal die Zahnleiste 9 bei der Aufstellbewegung des Überrollbügels gleiten kann und in welcher zum anderen eine Sperrklinke als das zweite Verriegelungselement drehbar angelenkt ist. Von dieser Sperrklinke ist in den Figuren 1 und 4 ihr verlängerter Hebelarm 10 zum manuellen Entsperren der Wiedereinfahrsperre zu erkennen.

An den Führungsteilen 2 ist jeweils ein nach unten gerichtetes Gehäuse 11 montiert, an dessen Boden sich jeweils in das Innere der Bügelschenkel 2 ragende Aufstellfedern 12 abstützen, und das den Führungs- und Abstützbereich des Überrollbügels abdeckt.
Die Aufstellfeder stützt sich jeweils mit ihrem anderen Ende an einem Anschlag im Innern des zugehörigen Bügelschenkels ab.

In den Figuren ist ein wagenbreiter Überrollbügel dargestellt, weil sich mit dieser Konzeption eine besonders große Druchladeöffnung erzielen lässt. Prinzipiell können jedoch auch zwei Überrollbügelsysteme sitzbezogen am Querträger befestigt sein.

### Bezugszeichenliste

- 1: Querträger
- 2: Führungsteil (block)
- 2 a: T-förmige Führungsansätze
- 2 b: Führungs-Bohrung
- 2 c: Schmale Öffnung
- 3: Bügelschenkel
- 4: Überrollbügel
- 5: Querjoch
- 6: Führungsschienen
- 7: Karosse
- 8: Steckbolzen mit Ring
- 9: Zahnleiste
- 10: Verlängerter Hebelarm
- 11: Gehäuse
- 12: Aufstellfedern

## Patentansprüche

1. Überrollschutzsystem für Kraftfahrzeuge mit mindestens einem Überrollbügel, der mittels seiner beiden Bügelschenkel (3) in einer fahrzeugfesten Halterung in Form eines zumindest annähernd wagenbreiten Querträgers (1) geführt aufgenommen ist, und im Normalzustand durch eine Haltevorrichtung in einer unteren, abgelegten Ruhelage haltbar sowie sensorgesteuert unter Lösen der Haltevorrichtung durch einen Energiespeicher in eine verriegelte aufgestellte, stützende Stellung bringbar ist, wobei der fahrzeugfeste Querträger (1) Führungsteile (2) mit jeweils einer Führungsöffnung (2 b) zur führenden Aufnahme des zugehörigen Bügelschenkels (3) besitzt, **dadurch gekennzeichnet, dass** am Querträger (1) an beiden Stirnseiten jeweils ein Führungsstück (2 a) ausgebildet ist, das in einer karosseriefest angebrachten Führungsschiene (6) längsverschiebbar aufgenommen ist.

2. Überrollschutzsystem nach Anspruch 1, **dadurch gekennzeichnet, dass** jeweils das Führungsstück (2 a) stufig verstellbar in der Führungsschiene (6) aufgenommen ist.

3. Überrollschutzsystem nach Anspruch 2, **dadurch gekennzeichnet, dass** zwei in einem vorgegebenen Abstand ausgebildete Stufen vorgesehen sind.

4. Überrollschutzsystem nach Anspruch 3, **dadurch gekennzeichnet, dass** der Abstand im Bereich 40 - 200 mm liegt.

5. Überrollschutzsystem nach einem der Ansprüche 2 bis 4, **dadurch gekennzeichnet, dass** zum Fixieren der Führungsstücke (2 a) in den jeweiligen Stufen Bohrungen in den Führungsstücken (2 a) und den Führungsschienen (6) ausgebildet sind in Verbindung mit Steckbolzen (8).

6. Überrollschutzsystem nach einem der Ansprüche 1 bis 5, **dadurch gekennzeichnet, dass** das Führungsstück (2 a) mit einem sich über die innere Wagenbreite erstreckenden Überrollbügel (4) jeweils an dem zugehörigen Führungsteil (2) stirnseitig als Ansatz angeformt ist.

7. Überrollschutzsystem nach einem der Ansprüche 1 bis 6, **dadurch gekennzeichnet, dass** das Führungsstück (2 a) T-förmig und die Führungsschiene (6) komplementär dazu ausgebildet ist.

8. Überrollschutzsystem nach einem der Ansprüche 1 bis 7, **dadurch gekennzeichnet, dass** an jedem Bügelschenkel (3) eine Zahnleiste (9) angebracht ist und jedes Führungsteil (2) eine schmale Öffnung (2 c) für den Durchtritt der Zahnleiste (9) aufweist, in welcher auch eine Sperrklinke für den verriegelnden Wirkeingriff mit der Zahnleiste (9) drehbar angelenkt ist.

9. Überrollschutzsystem nach Anspruch 8, **dadurch gekennzeichnet, dass** die Haltevorrichtung am Querträger (1) angeordnet ist.

## Claims

1. Rollover protection system for motor vehicles with at least one rollover bar which is held in a guided manner by means of its two bar side pieces (3) in a holder, which is secured to the vehicle, in the form of a cross-member (1) which is at least approximately of the car width, and in the normal state can be retained by a retaining device in a bottom, lowered rest position and can be brought under sensor control, while releasing the retaining device by means of an energy store, into a locked, raised, supporting position, wherein the cross-member (1), secured to the vehicle, has guide parts (2) each with a respective guide opening (2b) for holding the associated bar side piece (3) in a guiding manner, **characterised in that** a respective guide piece (2a) is formed at each of the two ends of the cross-member (1), which piece is held so as to be longitudinally displaceable in a guide rail (6) which is secured to the body.

2. Rollover protection system according to Claim 1, **characterised in that** the guide piece (2a) is in each case held in the guide rail (6) so as to be adjustable in a stepped manner.

3. Rollover protection system according to Claim 2, **characterised in that** two steps formed at a predetermined spacing are provided.

4. Rollover protection system according to Claim 3, **characterised in that** the spacing lies in the range of 40 - 200 mm.

5. Rollover protection system according to any one of Claims 2 to 4, **characterised in that** holes are formed in the guide pieces (2a) and the guide rails (6) in connection with stop pins (8) in order to fix the guide pieces (2a) in the respective steps.

6. Rollover protection system according to any one of Claims 1 to 5, **characterised in that** the guide piece (2a) is in each case formed with a rollover bar (4), which extends over the inner car width, on the associated guide part (2) at the end as an extension.

7. Rollover protection system according to any one of Claims 1 to 6, **characterised in that** the guide piece (2a) is T-shaped and the guide rail (6) is formed so as to be complementary thereto.

8. Rollover protection system according to any one of Claims 1 to 7, **characterised in that** a rack (9) is fitted to each bar side piece (3), and each guide part (2) comprises a narrow opening (2c) for the passage of the rack (9), in which opening a pawl for locking active engagement with the rack (9) is also rotatably articulated.

9. Rollover protection system according to Claim 8, **characterised in that** the retaining device is disposed at the cross-member (1).

## Revendications

1. Système de protection contre les tonneaux pour véhicules automobiles avec au moins un arceau de sûreté, qui est guidé à l'aide de ses deux montants d'arceau (3) dans un support fixé au véhicule sous forme d'une traverse (1) au moins presque aussi large que la voiture et qui, à l'état normal, maintenu et contrôlé par détection dans une position de repos inférieure posée à l'aide d'un dispositif de maintien, peut être amené dans une position de support montée verrouillée en libérant le dispositif de maintien au moyen d'un accumulateur d'énergie, dans lequel la traverse (1) fixée au véhicule comporte des pièces de guidage (2) avec chacune une ouverture de guidage (2b) pour le positionnement guidé du montant d'arceau associé (3), **caractérisé en ce que**, sur la traverse (1), sur les deux faces frontales, est formé un élément de guidage (2a) qui est positionné de manière à coulisser longitudinalement dans un rail de guidage (6) fixé à la carrosserie.

2. Système de protection contre les tonneaux selon la revendication 1, **caractérisé en ce que** l'élément de guidage (2a) est positionné dans le rail de guidage (6) de manière ajustable par gradins.

3. Système de protection contre les tonneaux selon la revendication 2, **caractérisé en ce qu'**il est prévu deux gradins placés à une distance prédéterminée.

4. Système de protection contre les tonneaux selon la revendication 3, **caractérisé en ce que** la distance se trouve dans la plage comprise entre 40 mm et 200 mm.

5. Système de protection contre les tonneaux selon l'une quelconque des revendications 2 à 4, **caractérisé en ce que**, pour la fixation des éléments de guidage (2a) dans les gradins correspondants, des alésages sont formés, en liaison avec des boulons à emboîtement (8), dans les éléments de guidage (2a) et les rails de guidage (6).

6. Système de protection contre les tonneaux selon l'une quelconque des revendications 1 à 5, **caractérisé en ce que** l'élément de guidage (2a) est moulé sous forme d'épaulement, sur la face frontale sur la pièce de guidage associée, avec un arceau de sûreté (4) s'étendant au-dessus de la largeur intérieure de la voiture.

7. Système de protection contre les tonneaux selon l'une quelconque des revendications 1 à 6, **caractérisé en ce que** l'élément de guidage (2a) est réalisé en forme de T et le rail de guidage (6) a une forme complémentaire de celle-ci.

8. Système de protection contre les tonneaux selon l'une quelconque des revendications 1 à 7, **caractérisé en ce qu'**un liteau denté (9) est monté sur chaque montant d'arceau (3) et chaque pièce de guidage (2) comporte une ouverture étroite (2c) pour le passage du liteau denté (9) dans laquelle un cliquet d'arrêt pour l'engrènement actif de verrouillage avec le liteau denté (9) est articulé en rotation.

9. Système de protection contre les tonneaux selon la revendication 8, **caractérisé en ce que** le dispositif de maintien est monté sur la traverse (1).
